# DEMANDE DE BREVET EUROPEEN

(11) **EP 4 265 512 A1**
(43) Date de publication de la demande: **25.10.2023**
(21) Numéro de dépôt: 22020185.9
(22) Date de dépôt: 22.04.2022
(51) Int. Cl.: B62M 9/122, B62M 9/1242, B62M 9/125, B62M 9/126, B62M 9/127, B62M 9/128

(54) **DÉRAILLEUR ARRIÈRE MODULAIRE ET INTÉGRÉ POUR BICYCLETTE**

(71) Demandeur: Bonnelye, Patrice, 13012 Marseille (FR)
(72) Inventeur: Bonnelye, Patrice, 13012 Marseille (FR); Bonnelye, Fabian, 06100 Nice (FR)

(57) **Abrégé**

Dérailleur de bicyclette modulaire et intégré fixé entre la cassette et le pédalier. Dans la forme de la réalisation suivant la figure 3 et la figure 4, le dérailleur comprend un ensemble déplacement sur lequel peut se monter indifféremment une commande manuelle par câble ou une commande électromécanique alimentée par la batterie dans le cas du VAE. Le corps de l'ensemble déplacement est monté rigide sur les bases du cadre ou du bras oscillant. L'ensemble chape est fixé à l'arbre pivot par la chape intérieure permettant de réduire l'encombrement latéral. Le système de commande électromécanique est composé d'un mécanisme d'indexation et d'un mécanisme de commande actionné par un ensemble électro-aimant linéaire bidirectionnel à rappel par ressort.

Une telle conception permet au dérailleur d'utiliser au mieux l'espace disponible entre le voile de la rue et les base du cadre ou du bras oscillant. Le dérailleur devient totalement intégré à la bicyclette, ne dépassant de la base du cadre. Pour les bicyclettes de type VTT, comme le diamètre extérieur à énormément augmenté compte tenu du passage au mono plateau, la conception de cette invention permet de réduire la distance entre le sol et la partie inférieure du dérailleur.

Les dérailleurs à commande électrique restent complexes à fabriquer. Ils sont principalement destinés aux bicyclettes haut de gamme. La présente invention a pour but de démocratiser l'utilisation de commande électrique par deux voies : la conception simple et robuste, l'intégration ouverte de la commande ce qui permet aux fabricants de vélo de concevoir eux même l'automatisme de passage de vitesse. L'objection étant une intégration plus complète avec la batterie et le moteur du VAE. La présente invention consiste en la conception d'une commande électromécanique dont la mise en mouvement est réalisée par un ensemble électro-aimant linéaire bidirectionnel à rappel par ressort couplé avec un système de cliquet. Cette conception met en œuvre une électronique simple, une mécanique robuste avec un nombre limité de pièce et une suppression de l'utilisation de terres rares par la suppression du moteur électrique de commande. L'alimentation électrique de cette commande provient de la batterie.

## Description

### Domaine technique

La présente invention concerne la construction des dérailleurs arrière de bicyclette à motorisation musculaire ou électrique. Elle couvre à la fois l'intégration mécanique dans le cadre et l'intégration électromécanique avec la motorisation électrique.

### Etat de la technique antérieure

Le dérailleur arrière est un mécanisme qui permet d'indexer la chaîne de transmission vis-à-vis d'un pignon d'une cassette montée sur la roue libre de la roue arrière. La cassette regroupe des pignons de différents diamètres. Ils sont organisés du plus petit au plus grand. Chaque pignon définit un rapport de vitesse. Ainsi les efforts du cycliste sur les pédales pourront être adaptés en fonction de la pente de la route. Dans un même esprit, il existe des dérailleurs pour les plateaux montés sur les pédaliers. Le nombre de plateaux et de pignons a beaucoup évolué sur ces vingt dernières années. Principalement pour les vélos tout terrain, le nombre de pignons sur la cassette a augmenté progressivement, il est passé de 7 à 12. Sur la même période, le nombre de plateaux du pédalier a été réduit de trois à deux pour les vélos de route et à un seul pour les vélos tout terrain notamment.

L'amélioration des performances des batteries et des moteurs électriques (poids, encombrement et rendement) a permis la démocratisation des vélos à assistance électrique (VAE). Pour ce type de vélo, le moteur peut se situer soit dans le moyeu de roue avant ou arrière ou au niveau du pédalier. Le changement de vitesse est réalisé soit par l'intermédiaire d'un dérailleur soit par une boite à vitesses à trains épicycloïdaux installée dans le moyeu arrière. Il a récemment été développé un moteur électrique équipé d'une boite de vitesses intégrée. Néanmoins les vélos à assistance électrique sont principalement équipés de dérailleur à commande manuelle.

Il est apparu des dérailleurs à commande électrique. Dans la plupart des cas, le dérailleur à commande électrique est équipé d'une batterie dédiée spécifique. Elle peut être directement intégrée au dérailleur ou se situer dans un boîtier déporté. La commande électrique intégrée au dérailleur est composée d'un moteur électrique dont la rotation est contrôlée par un codeur optique ou magnétique.

La transmission entre le moteur de la commande électrique et le mécanisme d'indexation du dérailleur est réalisée généralement par un train de pignons dentées et une vis sans fin montée sur l'axe du moteur du dérailleur. L'indexation des vitesses est commandée par un circuit électronique incluant des composants programmables onéreux. Le calage de l'indexation des vitesses devant être dans certain cas réalisé par une application sur téléphone portable. Les commandes électriques de dérailleur sont donc des mécanismes complexes et souvent coûteux. De surcroit, l'interface avec les moteurs des VAE en vue d'une régulation reste complexe étant donné la conception des dérailleurs à commande électrique conçus sur la base de moteur pas à pas commandés par codeur optique.

Toutes ces évolutions ont entraîné de nouvelles transformations dans la conception de dérailleurs arrière de vélo. Elles peuvent être néanmoins améliorées sur les points énoncés ci-après, et qui peuvent être regroupés en trois thèmes, l'encombrement général et le déplacement des pignons tendeur et de guidage, la commande manuelle et la commande électrique.

Compte tenu de l'augmentation du nombre de pignons de la cassette et étant donné que la largeur des cassettes est normalisée, la distance latérale entre chaque pignon a diminué ainsi que la largeur de la chaîne. De ce fait, la précision de l'indexation du dérailleur vis-à-vis des pignons devient une performance essentielle. Une des imprécisions provient du jeu entre l'axe AX de pivotement et le corps du dérailleur. Ce jeu dépend de la qualité de fabrication et de l'usure. Ce jeu est amplifié du rapport entre la longueur de l'axe de pivotement et la distance entre les pignons tendeurs et de guidage respectivement vis-à-vis de l'axe de pivotement. La Figure la montre le jeu latéral J.

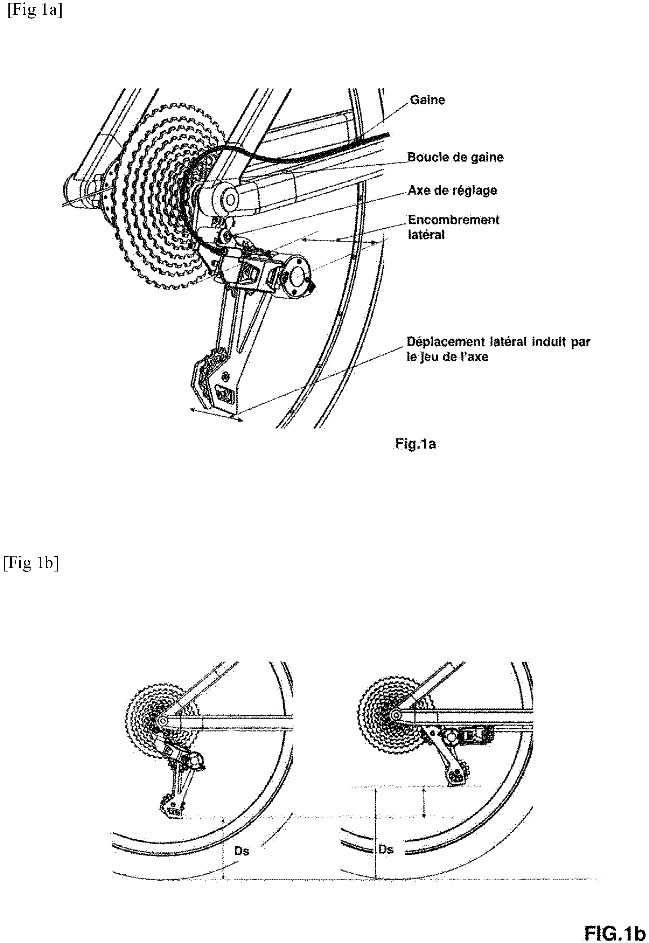

Principalement dans le cas de vélo tout terrain, et dans le cas d'un vélo équipé d'un seul plateau, afin de procurer des rapports de vitesse adéquat, les quatre derniers rapports sont réalisés avec des pignons de tailles significatives avec un nombre de dents, le plus courant, respectivement, et sans limitation, 32,36,42,52 dents. De ce fait, dans son fonctionnement, la partie inférieure de la chape se rapproche du sol. Et ce malgré l'augmentation du diamètre des roues qui est passée de 26" à 29", voir Figure 1b.

Suivant la Figure 1a, malgré des efforts de réduction de l'encombrement latéral EL des dérailleurs, parce qu'ils sont fixés proches de l'axe de la roue arrière, par l'intermédiaire d'une bride de liaison et d'un axe de pivotement de la position angulaire, les dérailleurs peuvent dépasser du bras oscillant. Cet encombrement est amplifié pour les dérailleurs à commande électrique, la taille du mécanisme de commande augmentant significativement la taille latérale.

Compte tenu de ce qui vient d'être décrit, le dérailleur est devenu maintenant très exposé aux pierres, aux racines et aux branches en usage tout terrain. Le dérailleur est considéré aujourd'hui par certains vététistes comme un accessoire consommable et fait partie des pièces de rechange à embarquer avant toute sortie.

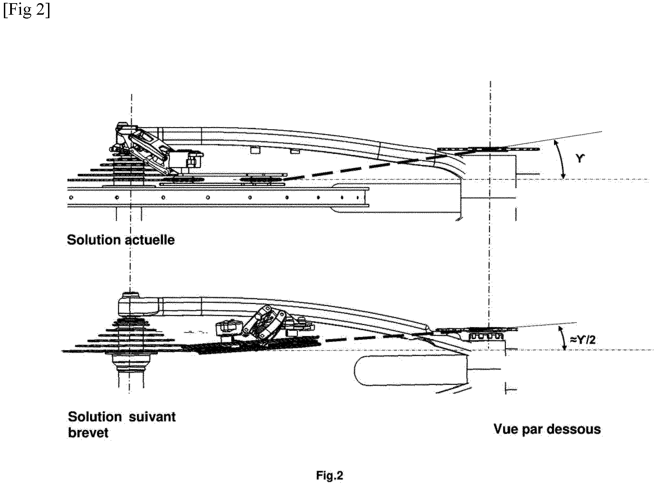

Dans la conception actuelle des dérailleurs, suivant le schéma donné par la Figure 2, lors du changement de vitesse, le déplacement du galet tendeur, du galet de guidage et de la chape qui les relie reste dans un plan parallèle au plan longitudinal du vélo. Le plan longitudinal est perpendiculaire à l'axe géométrique de la roue arrière et passe par le centre de la section de la jante. Au fur et à mesure de ce déplacement l'ensemble galet de guidage, galet tendeur et chape se trouve décalé vis-à-vis du plan du plateau du pédalier. Se désaxage Y devient très important pour les derniers plus grands pignons. Ce désaxage génère un effort perpendiculaire au plan longitudinal du vélo sur la chape au niveau du galet tendeur. Ce phénomène génère une usure importante de la chaîne, du galet tendeur et une réduction du rendement du pédalage induit par les forces de frottement. Il est d'autant plus important qu'il se produit quand la chaîne se situe sur les plus grands pignons, position où les efforts de rappel du ressort de tension de la chaîne sont les plus élevés.

La dimension des chaînes est standardisée sur un pas de 12.7mm (1/2 pouce). Cette dimension semble avoir été déterminée par la charge maximale admissible sur les dents de la cassette. Un pas de 9.52mm (3/8 pouce) serait plus adapté surtout pour les vélos pour enfants.

Pour les vélos de compétitions, notamment pour les courses contre la montre ou pour le triathlon le dérailleur électrique dans sa position actuelle représente une protubérance qui peut nuire à la signature aérodynamique du vélo.

Dans le cas de dérailleur à commande manuelle suivant la Figure 1a, la liaison entre la gaine qui contient le câble de commande et le corps du dérailleur génère une imprécision. En effet, la gaine contenant le câble de commande vient se connecter au corps du dérailleur par sa face postérieure. De ce fait la gaine doit réaliser une boucle B. Sa longueur génère une imprécision de l'indexation et induit un frottement qui est néfaste au confort du changement de vitesse. Dans certains cas, dans le but de supprimer cette boucle, le dérailleur est équipé d'une poulie de renvoi d'angle. Cette complexité nuit aussi à la précision et à la fiabilité de l'indexation.

Dans la conception actuelle, les dérailleurs à commande électrique sont constitués par un moteur électrique commandé par un système électronique. La position angulaire du dérailleur est définie électroniquement, les moteurs étant équipés d'un codeur angulaire optique ou magnétique. Les fabricants de tels dérailleurs fournissent un système complet incluant le dérailleur, sa batterie et son système de commande et de contrôle. De plus, les dérailleurs à commande électrique possèdent généralement leur propre batterie alors qu'ils pourraient utiliser la batterie du vélo VAE. Les systèmes actuels sont donc des systèmes fermés. Cette conception limite la possibilité au fabricant de vélo de développer eux même de logique de fonctionnement notamment pour des vélos VAE.

Dans la conception actuelle les dérailleurs à commande électrique sont équipés d'un système permettant de désaccoupler le moteur électrique et son train de pignons et l'ensemble chape lors d'un choc sur le dérailleur. Néanmoins ce système transmet un effort, certes limité, sur le train de pignon, ce qui peut nuire à la fiabilité du dérailleur.

Enfin, quand la batterie du dérailleur électrique est vide, le changement de vitesse même en mode dégradé n'est pas envisageable.

L'objet de la présente invention a pour but d'améliorer l'intégration électrique et mécanique des dérailleurs arrière de vélo. Cette invention apportera une amélioration de la précision du changement vitesse, une réduction de l'encombrement latéral et vertical afin d'augmenter la fiabilité et la résistance aux chocs, un désaccouplement de la motorisation de la commande électrique et de l'ensemble chape dans les phases hors changement de rapport, la possibilité de pouvoir changer de rapport de vitesse en mode dégradé pour les VAE (lorsque la batterie est vide), une adaptation possible d'un capot aérodynamique et le montage d'une chaîne d'un pas plus faible que ½ pouce.

### Résumé des figures

FIGURE la représente un dérailleur de conception standard. Elle montre le chemin de la gaine du câble de commande se raccordant sur la partie postérieure du dérailleur. Elle montre aussi l'encombrement général ainsi que l'axe de pivotement du dérailleur.
FIGURE 1b représente la différence entre l'encombrement vertical d'un dérailleur standard comparé à un dérailleur construit suivant les principes du présent brevet.
FIGURE 2 représente, en vue par-dessous du vélo, la différence entre le chemin actuel d'une chaîne qui est très désaxée (vue supérieure) lors de l'usage des pignons de plus grand diamètre comparativement à la solution décrite dans le présent brevet (vue inférieure).
FIGURE 3 représente une vue en perspective et semi éclatée du dérailleur dans sa version à commande manuelle.
FIGURE 4 représente une vue en perspective et semi éclatée du dérailleur dans sa version à commande électrique.
FIGURE 5a représente une vue en perspective de l'ensemble des différents composants communs aux versions à commande manuelle et commande électrique, vue du côté extérieur droit du vélo.
FIGURE 5b représente une vue en perspective de l'ensemble des différents composants communs aux versions à commande manuelle et commande électrique, vue du côté intérieur.
FIGURE 6 représente deux vues en perspective de la commande manuelle par câble. Le corps et la bascule intérieure non représentés.
FIGURE 7a représente une vue en perspective du mécanisme d'indexation ainsi que la définition des angles ω1 et ω2.
FIGURE 7b représente une vue en perspective du mécanisme de transmission.
FIGURE 7c représente le mécanisme de transmission en buté dans la position maxi sens antihoraire de la crémaillère.
FIGURE 7d représente le mécanisme de transmission en buté dans la position maxi sens horaire de la crémaillère.
FIGURE 8 représente une vue du dérailleur équipé de la commande manuelle assemblée sur le vélo, équipé de la gaine et du câble de commande. Le chemin de la gaine se trouve dans le prolongement de la base du cadre.
FIGURE 9 représente une vue du dérailleur équipé de la commande électrique assemblée sur le vélo. Elle montre le chemin du câblage électrique et la position du capteur de vitesse assemblé sur le couvercle de la commande.
FIGURE 10 représente une vue qui détaille la position de l'angle σ1, angle entre l'axe du tambour et l'axe de la roue arrière.
FIGURE 11 représente une vue de la position du galet de guidage vis-à-vis du pignon de plus petit diamètre, le galet de guidage se trouvant dans le même plan que celui du pignon de plus petit diamètre. La chape extérieure n'est pas représentée.
2
FIGURE 12 représente une vue en coupe de tambour, montrant les différents éléments de guidage et de tension.
FIGURE 13 représente le logigramme de fonctionnement de la commande électromécanique.

### Description détaillée

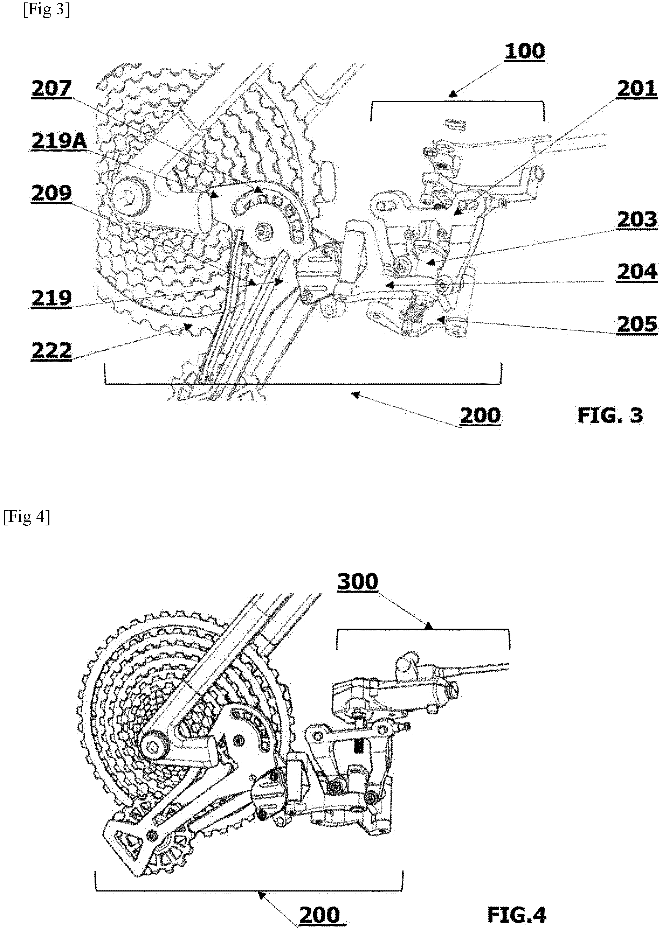

Le dérailleur est un mécanisme installé sur un vélo qui permet d'indexer une chaîne sur un ensemble de pignons de différentes tailles se trouvant sur la roue libre de la roue arrière. Ce déplacement peut s'effectuer dans les deux sens du pignon de plus petit diamètre vers le pignon de plus grand et vis-versa. A chaque pignon correspond un rapport de vitesse. La gamme de dérailleurs du présent brevet comprend suivant les Figure 3 et Figure4 ; un ensemble 'déplacement' 200, une commande par câble 100 et une commande électrique 300. Ainsi, cette modularité permet de configurer le dérailleur en fonction de l'utilisation du vélo,

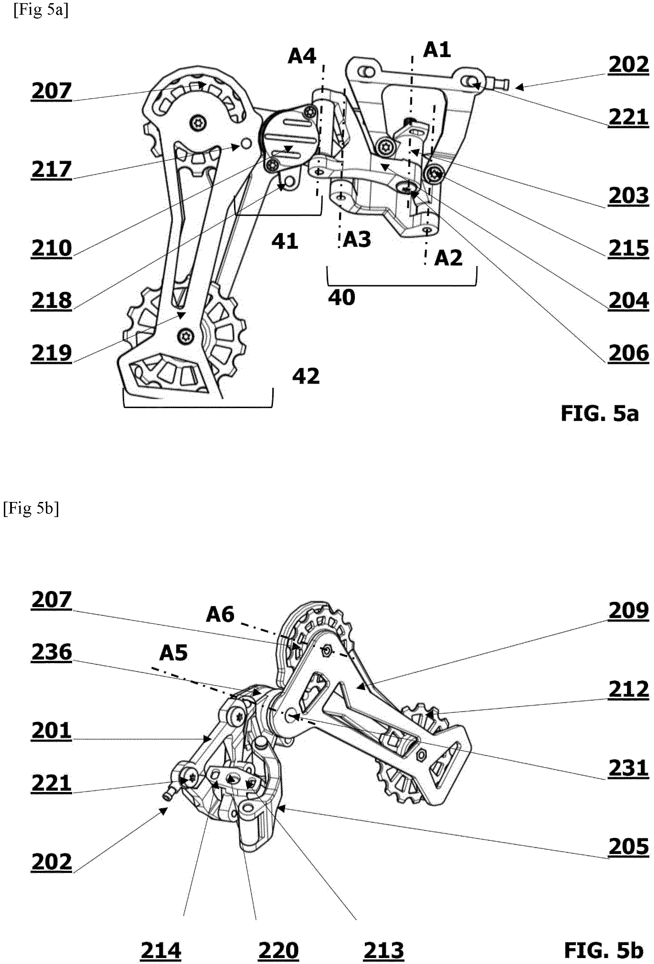

L'ensemble 'Déplacement' 200, de la présente invention et dans la forme de réalisation selon les Figure 3, Figure 5a et Figure 5b est positionné en aval de la cassette, il se situe donc entre la cassette et le pédalier. L'ensemble 'Déplacement' 200 permet le déplacement latéral et la tension de la chaîne. Il comprend : l'ensemble quadrilatère 40 qui assure l'indexation de la chaîne vis-à-vis des pignons, l'ensemble tambour 41 et l'ensemble chape 42, l'ensemble quadrilatère 40 qui comprend le corps 203, la bascule motrice 204, la bascule intérieure 205 et le corps du tambour 236.

L'ensemble quadrilatère 40 est fixé au cadre ou au bras oscillant par une bride de liaison 201. La bride de liaison relie le bras oscillant ou la base du cadre au corps 203. Contrairement aux fabrications actuelles cette fixation est rigide. C'est-à-dire qu'il n'y a pas de rotation possible entre le corps 203 auquel est fixé la bascule motrice 204 et la bascule intérieure 205 et le bras oscillant ou la base du cadre. Cette fixation est réalisée par deux vis 221.

Les deux vis 221 sont positionnées suivant des axes perpendiculaires vis-à-vis du plan longitudinal de la bicyclette. L'axe géométrique de ces deux vis définissent le plan P1. Le plan P1 est orthogonal par rapport au plan longitudinal. La bride de liaison 201 possède deux trous oblongs permettant le réglage longitudinal. Ils permettent d'ajuster la distance entre la cassette 222 et le galet de guidage 207. Ce réglage s'effectue en vissant ou en dévissant la vis 202. La distance entre les deux vis de fixation est de 50.8 mm (2 pouces) dans le but de normaliser cette dimension et la rendre identique à celle utilisée pour fixer les étriers des freins à disque.

La bride de liaison 201 se fixe sur la face interne ou sur la face inférieure du bras oscillant ou de la base du cadre. La face interne du bras oscillant ou de la base du cadre est la face qui se situe du côté du pneu. La face externe est la face qui est vue par un observateur positionné du côté pédalier du vélo.

La bride de liaison est équipée de deux vis de réglage 108. Elles permettent le réglage angulaire des positions maxi et mini du bras de commande 102.

Le système de réglage longitudinal tel que décrit ci-dessus permet de supprimer le système de réglage angulaire utilisé sur les dérailleurs actuels.

Contrairement au brevet 0 585 472 A1, le corps 203 est fixé de façon rigide à la bride de liaison 201. De ce fait, le corps 203 est fixe par rapport au bras oscillant ou à la base du cadre. Cette fixation, du corps 203 sur la bride de liaison 201 est réalisée par deux vis 215. Suivant la Figure 5a, ces deux vis sont situées de part et d'autre du cylindre du corps 203 qui guide l'axe de transmission 106 ou 303. Le corps 203 est équipé dans sa partie supérieure d'une bride de fixation 213. Cette bride de fixation 213 permet le raccordement indifféremment du système de commande manuelle à câble 100 ou de commande électrique 300. La bride de fixation 213 possède deux trous oblong circulaires 214. Ils permettent une orientation angulaire des dispositifs de commande à câble 100 ou de commande électrique 300. La bride de fixation possède un chambrage permettant le centrage des dispositifs de commande 100 et 300.

Suivant les Figures 5a et 5b, le corps 203 peut être équipé de paliers de guidage de l'arbre de transmission 106 ou 303 des systèmes de commande. Ils sont situés aux extrémités du corps 203. Ces paliers définissent l'axe A1. Le raccordement avec la bride de fixation 213 est réalisé par deux vis 107,302 positionnées de part et d'autre du cylindre du corps guidant l'axe de transmission. Les arbres de transmission respectivement 106, 303 sont fixés à la bascule motrice 204. Cette liaison est réalisée par un ensemble de rainures ou tout autre système anti-rotation. Suivant la figure 5a la bascule motrice possède d'une part une fourche définissant deux paliers qui englobent le palier du tambour 236, et d'autre part une branche dans laquelle vient se fixer l'arbre de transmission. La bascule motrice oscille autour de l'axe A1. Le corps est muni d'un deuxième bossage percé parallèlement à l'axe A1 définissant l'axe A2. La bascule intérieure 205 pivote autour de l'axe A2. La bascule motrice 204 et la bascule interne 205 sont reliées au corps du tambour 236 par deux axes qui définissent respectivement les axes A3 et A4. Les quatre axes A1, A2, A3, A4, définissent un parallélogramme déformable. C'est la déformation de ce parallélogramme qui permet l'indexation de l'ensemble chape 42 générée par la rotation de l'arbre de transmission. L'arbre de transmission étant actionné lui-même par la commande à câble 100 ou par la commande électromécanique 300.

On définit le plan P2. P2 est perpendiculaire aux axes de pivotement A1, A2, A3, A4. L'intersection du plan P2 avec le plan P1 définit un angle σ1 compris entre 25° et 35° pour les vélos équipés de cassette de 9,11,12,13 vitesses. σ1 peut être égal à zéro pour les vélos équipés de cassettes de jusqu'à 9 vitesses maximum à commande manuelle.

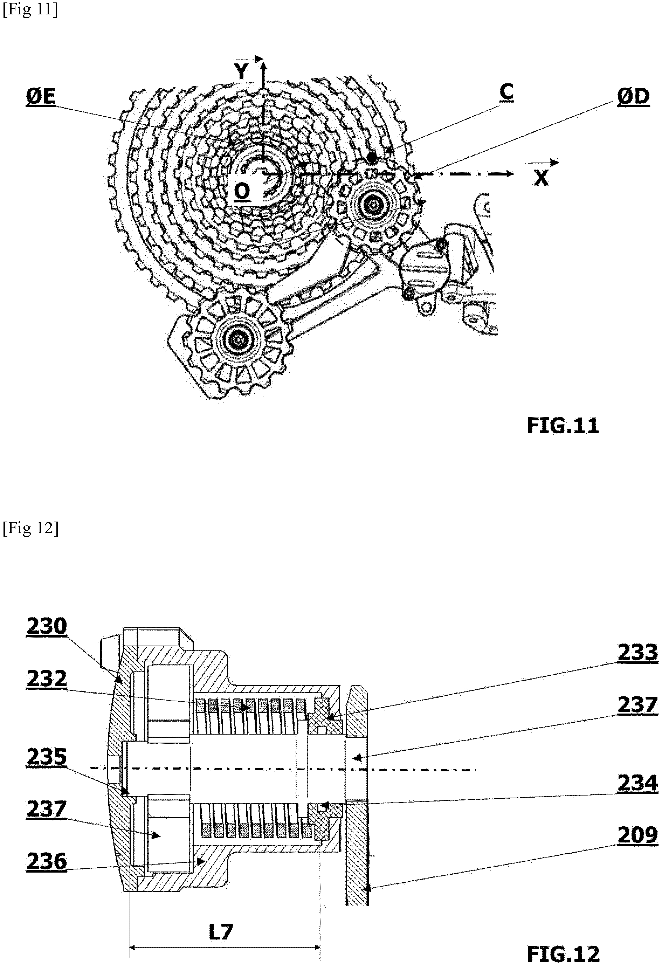

Suivant la Figures 12 et la Figure 5a, l'ensemble tambour 41 comprend le corps du tambour 236, l'arbre pivot 237, le palier principal 233 équipé de son joint torique 234, le palier secondaire 235, le ressort de rappel 232 qui permet la tension de la chaîne, l'amortisseur 235 non représenté qui permet d'amortir les rotations brutales de l'ensemble chape 42 lors des chocs, le couvercle 230 et le trou d'indexation 218 permettant le passage d'un tournevis ou d'une clé hexagonale.

Le ressort 232 exerce une force de tension sur la chaîne par la génération d'un couple sur l'ensemble chape 42 dans le sens horaire (vue roue arrière à gauche et roue avant à droite).

Contrairement aux productions actuelles et notamment aux brevet EP 1 939 085 A2, EP1 747 985 A2, EP 0 585 472 A1, US 9751590B2, et US 2017/0217539 A1, afin de réduire l'encombrement, l'arbre pivot 231 est fixé par rivetage ou tout autre moyen à la chape intérieure 209. La distance entre l'axe A5 de l'arbre pivot 231 et l'axe A6 du galet tendeur 207 est telle qu'elle permette le passage de la chaîne au-dessus du diamètre extérieur du corps du tambour 236.

Suivant la Figure 12 l'arbre pivot 231 oscille par rapport au corps du tambour 236 sur le palier principal 233 et le palier secondaire 235. Le palier principal peut être usiné directement dans le corps du tambour 236 ou être usiné dans une pièce rapportée. Le palier secondaire 235 est usiné dans le couvercle 230. Une extrémité du ressort de rappel 232 vient se fixer dans sur la chape intérieure 209. La deuxième extrémité est fixée sur le du tambour 236. Le système de rappel peut être équipé d'un amortissement 237 de mouvement de l'ensemble chape 42.

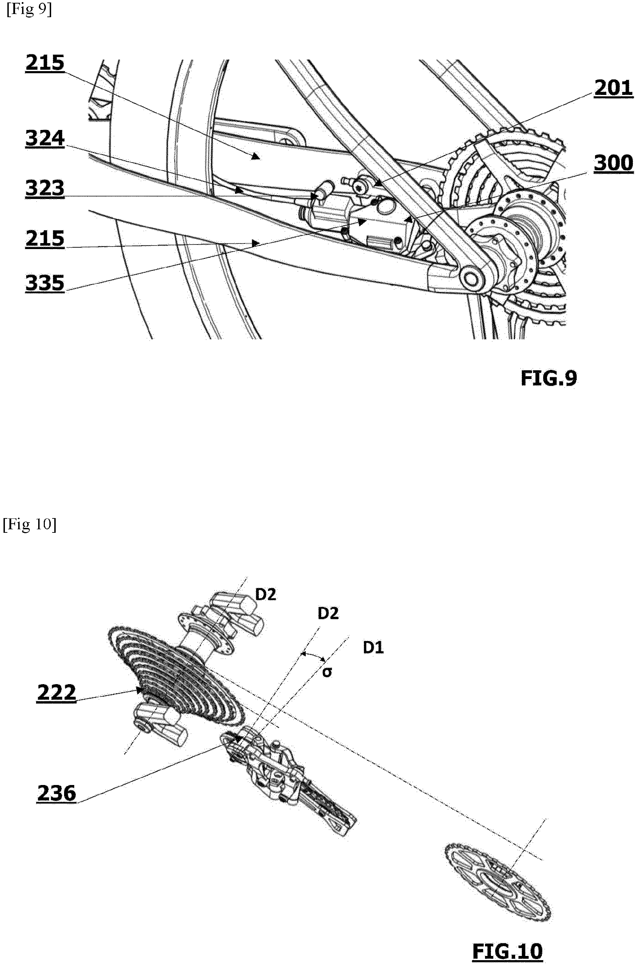

Pour améliorer l'alignement moyen entre la cassette 222, le galet de guidage 207, le galet tendeur 212 et le plateau du pédalier, l'axe géométrie du corps du tambour A5, est décalé. Suivant la Figure 10, soit la droite D1, la projection orthogonale de l'axe A5 du tambour sur le plan P1. Soit D2 la projection orthogonale de l'axe de la roue arrière sur le plan P1. Alors l'angle σ définit par ces deux droites D1 et D2 est d'une valeur comprise entre 1° et 3°.

L'ensemble chapes 42 comprend, suivant les figures 5a et 5b, le galet de guidage 207, le galet tendeur 212, la chape intérieure 209 et la chape extérieure 219. La chape intérieure 209 assure la liaison entre le galet de guidage 207, le galet tendeur 212 et l'arbre pivot 231. Cette construction permet une réduction significative de l'encombrement latéral. La chape extérieure 219 relie le galet de guidage 207 et le galet tendeur 212. La chape extérieure 219 possède sur son flan arrière une protubérance 219A en forme de languette. Cette protubérance 219A permet d'accompagner la chaine lors des phases de changement de vitesse du petit pignon vers les grands pignons.

Contrairement au brevet 0 585 472A1, considérant la position du dérailleur vis à vis de la cassette, la distance entre l'axe A5 du tambour 236, l'axe de rotation du galet de guidage A6, le diamètre moyen du galet de guidage ØD, le diamètre moyen du petit pignon ØE, le dérailleur étant indexé sur le pignon de plus petit diamètre alors suivant la Figure 11 deux conditions géométriques sont satisfaites; sur l'axe X l'abscisse de l'axe de rotation A6 du galet de guidage 207 est supérieure à la somme du diamètre primitif du plus petit pignon de la cassette ØE et du diamètre primitif du galet de guidage ØD divisé par deux ((ØE+ØOD)/2) et sur l'axe Y l'ordonnée du point C est positive. On définit le point C coïncident au cercle primitif du galet de guidage, positionné de telle sorte que son ordonnée soit maximale positive.

Les deux conditions géométriques sont définies dans le repère orthogonal qui a pour origine l'axe géométrique de la roue arrière, l'abscisse X passe par l'axe du pédalier dans le sens croissant. L'ordonnée Y est perpendiculaire à l'abscisse X, le sens croissant étant orienté de l'axe géométrique de la roue arrière vers la partie supérieure de la bicyclette.

Compte tenu de la disposition précédente, comme la chaîne enroule plus les pignons comparativement aux constructions actuelles, le nombre de dents en prise sur les premiers petits pignons de la cassette est plus important. Cette augmentation du nombre de dents en prise réduit la charge par maillon de chaîne. Il est donc possible avec cette nouvelle position du galet de guidage 207 de réduire le pas de la chaîne, le passer de 1/2 pouces (12.7 mm) à 3/8 pouces (9.58 mm).

La chape extérieure 219 est percée d'un trou 217. Afin de faciliter le démontage de la roue arrière, il est possible de bloquer la chaîne en position détendue. Il suffit de faire une rotation de l'ensemble chape 42 et d'aligner les trous 217 et 218 se trouvant respectivement sur le tambour 236 et la chape extérieure 217 et si nécessaire sur la chape intérieure 209. L'alignement des trous permet le passage d'un tournevis ou d'une clé six pans. Ce dispositif permet le blocage du dérailleur en position détendue. Le dérailleur étant en position aval, la roue arrière est totalement dégagée, le démontage devient simple.

Pour des raisons d'esthétique, de protection mécanique, d'aérodynamique ou d'autres raisons, le dérailleur peut être recouvert d'un capot. Suivant les usages et sans limitation, le capot peut être fixé directement sur le dérailleur ou sur le cadre ou le bras oscillant. Le capot peut être réalisé dans certains cas en deux parties. Une partie couvrant la partie fixe du dérailleur, une autre la partie mobile.

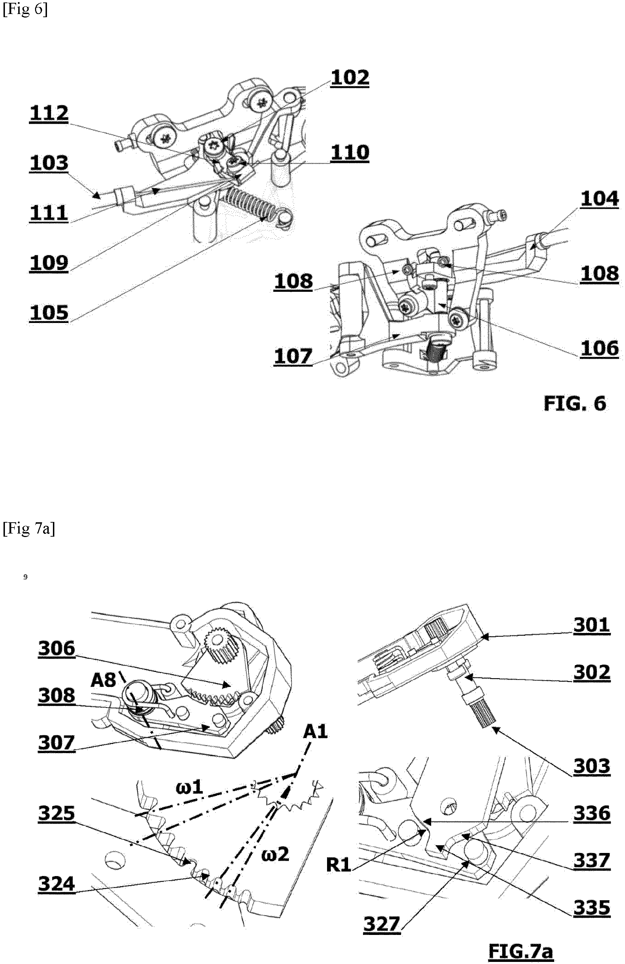

Dans le cas d'un dérailleur à commande manuelle par câble alors la commande 100 est composée suivant la Figure 6 par une semelle 101, un bras de commande 102 muni de deux oreilles 113, l'arbre de transmission 106 et un ressort de rappel 105.

La semelle 101 assure le raccordement entre la gaine de commande 103 contenant le câble de commande 111 et le corps 203. Elle intègre aussi les deux vis butées de réglage angulaire 108 alignant la position du dérailleur vis-à-vis du plus petit et du plus grand pignon. Ces butées de réglage viennent en contact avec le bras de commande 102. La semelle 101 est centrée vis-à-vis du corps par un chambrage pratiqué sur la partie inférieure. La semelle de liaison 101 se fixe sur la partie supérieure du corps 203 par l'intermédiaire de deux vis 107. La semelle 101 est réglable en rotation grâce au trous oblongs 214 pratiqués dans la bride de liaison 213 du corps 203. Cette fonctionnalité permet d'améliorer le cheminement de la gaine.

Le bras de commande 102 est solidaire de l'arbre de transmission 106. Cette liaison solidaire est assurée par des cannelures ou tout autre moyen d'arrêt en rotation. Elle est équipée d'une vis serre câble 110 et d'une plaque de serrage 109.

Le câble de commande 111 s'enroule dans une rainure pratiquée dans la zone extérieure du bras de commande 112. La surface d'enroulement du câble peut être une rainure torique. La distance de chaque point du centre de la section est distante du centre l'arbre de transmission d'un rayon R. La valeur de ce rayon peut ne pas être constante. Elle dépend de la conception de la commande au guidon.

L'arbre de transmission 106 est rainuré à chaque extrémité. Ces rainures peuvent être remplacées, sans limitation, par d'autres dispositifs d'arrêt en rotation. L'arbre de transmission 106 relie le bras de commande 102 à la bascule motrice 204. L'arbre de transmission 106 est guidé dans le corps 203 par un ou plusieurs paliers 220. Une vis ou un écrou est monté à chaque extrémité. Ils réalisent le blocage en translation de la bascule motrice 204 et le bras de commande 102.

Le ressort de rappel 105 est fixé à une extrémité sur la bascule intérieure 205. L'autre extrémité vient se fixer sur le pivot de liaison situé sur l'axe de liaison A3. Le ressort de rappel 105 exerce une force qui ramène l'ensemble tambour 41 et l'ensemble chape 42 vers la position où se situe le pignon de plus petit diamètre.

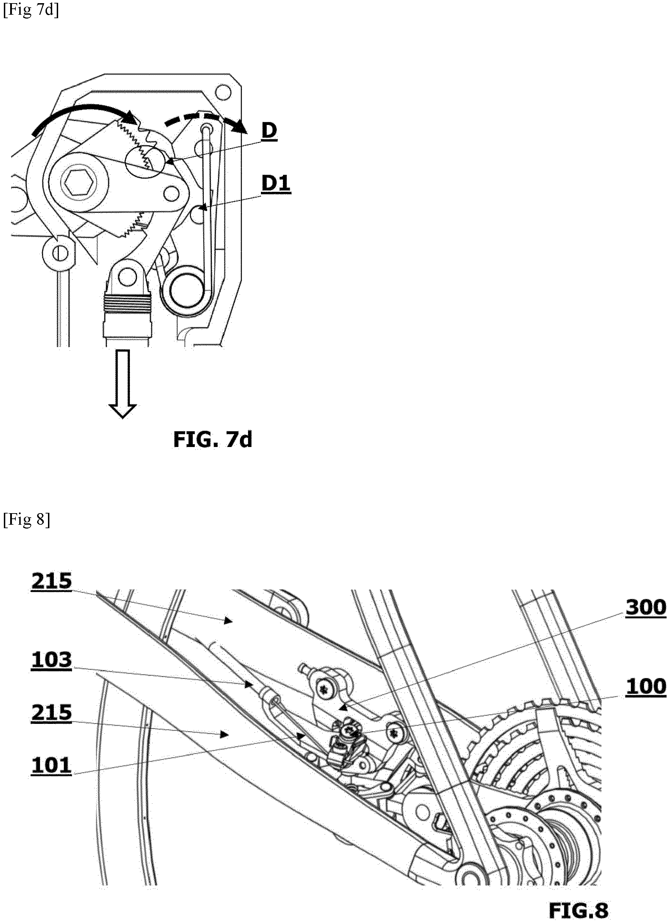

Suivant la Figure 8, la gaine 103 guidant le câble de commande 111 se connecte directement et frontalement sur la semelle de liaison 101. De cette façon, la position de la gaine 103 se fait dans le prolongement du bras oscillant ou des bases du cadre sans boucle ni renvoi d'angle contrairement aux brevets EP 1 747 985 A2 et US 9751590B2. La gaine se situe dans la zone comprise entre la partie intérieure du bras oscillant ou de la base du cadre et la roue. Le raccordement entre la gaine 103 et la semelle 101 est assurée par un logement cylindrique 104 dans lequel la gaine 103 vient se loger. Ce logement 104 se situe sur la face frontale de la semelle de liaison 101. La profondeur du logement 104 est au moins égale à une fois le diamètre extérieur de la gaine 103. Ainsi le raccordement de la gaine s'intègre dans le prolongement de la base du cadre ou du bras oscillant. Le trajet du câble devient direct. Il améliore la précision du positionnement du dérailleur et sa sensibilité.

Dans son fonctionnement, une traction sur le câble de commande 111 entraîne en rotation le bras de commande 112, qui entraîne la bascule motrice 216 par l'intermédiaire de l'arbre de transmission 106. La rotation de la bascule motrice 216 génère une déformation du quadrilatère 40. Il y a alors un déplacement de l'ensemble chape 42 et changement de vitesse.

Dans le but de simplifier la commande par câble, le logement 104 dans lequel la gaine vient de fixer peut-être déporté directement sur le bras oscillant. Dans le cas de vélo semi-rigide, le logement 104 peut être déporté sur le montant frontal du cadre. Alors un patin anti-friction est positionné sur la partie inférieure du boitier de pédalier.

La commande électrique est un système d'actuation électromécanique qui permet de transformer une impulsion électrique en une rotation de l'arbre de transmission 303 d'une valeur angulaire variable correspondant à l'indexation de chacune des vitesses. C'est-à-dire qu'une impulsion électrique permettra à l'ensemble tambour 40 et l'ensemble chape 42 de se déplacer et de s'aligner face à un nouveau pignon de la cassette soit en montant soit en descendant les vitesses. L'impulsion électrique étant générée simplement par la fermeture du circuit de commande par deux boutons poussoir se situant au niveau du guidon. Un bouton '+' permettant de monter les vitesses, un bouton '-' permettant de descendre les vitesses.

L'alimentation du système de commande électromécanique est la batterie du VAE. Il n'est donc pas alimenté par une batterie spécifique. Ce système simple permet à la commande d'être ouverte à tout système électronique de régulation de vitesse ou d'assistance au pédalage. Le principe de commande est basé sur un électro-aimant linéaire bidirectionnel actionnant une roue crantée.

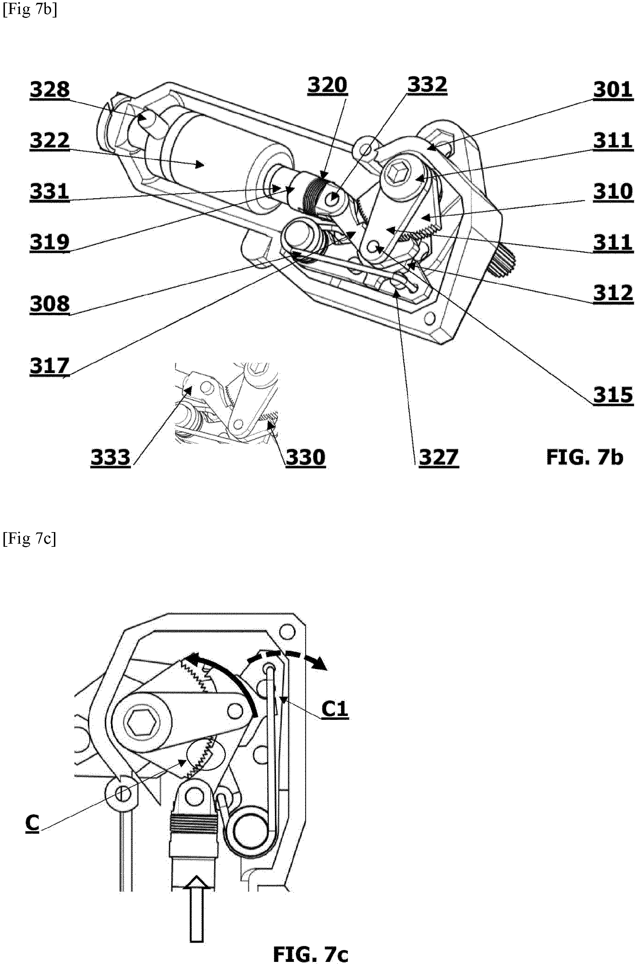

Le système d'actuation électromécanique est composé par un mécanisme d'indexation suivant la Figure 7a couplé à un mécanisme de transmission du mouvement suivant la Figure 7b.

Le mécanisme d'indexation a pour fonction de bloquer l'arbre de transmission 303 dans une position angulaire donnée correspondant à un alignement entre l'ensemble chape 42 vis-à-vis d'un pignon de la cassette. Ce système indexe une vitesse.

Suivant la Figure 7a, le mécanisme d'indexation est composé par la poulie d'indexation 306, le palonnier de blocage 307 et le ressort de pression 308.

La poulie d'indexation est solidaire de l'arbre de transmission 303 par un ensemble de rainures ou par tout autre dispositif d'arrêt en rotation.

La poulie d'indexation 306 comprend un ensemble d'encoches d'indexation 324. Le nombre d'encoche 324 est égal au nombre de vitesses. Pour un vélo de 7 vitesses il y aura 7 encoches, pour un vélo à 11 vitesses il y aura 11 encoches par exemple.

Suivant la Figure 7a les encoches d'indexation 324 sont angulairement positionnées. Le centre du font de chaque encoche fait correspondre le plan de symétrie longitudinale du galet de guidage avec le plan de symétrie longitudinale du pignon de la cassette correspondant. Soit l'angle ω2, définit par les droites, passant par les centres du fond des encoches, prises deux à deux, des encoches 324 et l'axe A1, centre de l'arbre de transmission. Le calcul de l'angle ω2 entre chaque fond de chaque dent tient compte de la distance entre le premier pignon et le dernier pignon de la cassette, de l'angle d'inclinaison du plan du parallélogramme par rapport au plan longitudinal du vélo σ1 ainsi que de l'angle entre le plan passant par les deux axes de rotation des bascules, A1 et A2 et le plan longitudinal. De ce fait, l'angle ω2 n'est pas constant. Le plan de symétrie longitudinale du galet de guidage et du pignon est perpendiculaire à l'axe de rotation du galet de guidage ou du pignon.

Soit l'angle ω1, défini par les droites prises deux à deux passant par le centre du sommet de de chaque encoche 324, prise deux par deux, et l'axe A1. L'angle ω1 est variable.

Le palonnier de blocage 307 est muni d'un doigt de blocage 325. Le diamètre en extrémité du doigt de blocage 325 est au plus égal au diamètre en fond d'encoche. Le ressort de pression 308 maintient l'arbre de transmission 303 en position, le doigt de blocage 325 venant se loger dans une encoche 324 de la poulie d'indexation 306. Le palonnier de blocage 307 est équipé de deux pions butés cylindriques 327.

Le ressort de rappel 308 maintient une pression entre le doigt de blocage et 325 et la poulie d'indexation. Le ressort 308 prend appui sur le corps 301 et sur le palonnier 327. Dans le but de réduire l'encombrement général le ressort pourra être localisé plus proche de l'axe de rotation du palonnier 327.

Le mécanisme de transmission du mouvement suivant la Figure 7b transforme le mouvement de translation bidirectionnel du noyau 331 de l'ensemble électroaimant 322 en une rotation de l'axe de transmission 303. Il est composé par une ensemble électroaimant 322 muni d'un noyau 331. L'ensemble électroaimant 322 est bidirectionnel, le noyau 331 se déplace dans les deux sens. L'ensemble électroaimant 322 oscille autour d'un axe 328.

En extrémité du noyau 331 est fixée une chape 319. Elle maintient le cliquet 317. Le cliquet 317 oscille autour de l'axe 332. Le diamètre intérieur du ressort 320 est inférieur à la largeur de la queue du cliquet 333. De ce fait, le cliquet est centré vis à vis du noyau par l'intermédiaire du ressort 320. Le cliquet 317 est muni de deux dents 330. Elles réalisent la liaison fixe avec la crémaillère 310 suivant le sens de mouvement.

La crémaillère 310 est solidaire de l'arbre de transmission 303 par un ensemble de cannelures ou toute autre moyen. Le cliquet 317 est maintenu de part et d'autre de la crémaillère 310 par la bride de transfert supérieure 311 et la bride de transfert inférieure 312. Les brides de transfert 311 et 312 oscillent autour de l'arbre de transmission 303. Elles sont liées entre elles par l'axe 332. La bride de transfert inférieure 312 possède en son extrémité un nez 335 relié au corps par deux pentes 336 et 337. Les profils des pentes de raccordement 336 et 337 sont différents afin de compenser leur position radiale vis-à-vis de l'axe de rotation A8. Les pentes et le nez sont relies par un rayon R1.

Le cliquet 317 oscille par rapport à l'axe 332. Le cliquet 317 pivote par rapport aux brides de transfert 311 et 312 via l'axe 332.

En position repos, quand l'ensemble électroaimant n'est pas alimenté électriquement, la bride de transfert inférieure 312 est maintenue en position centrée par les deux pions buté 327. De par cette conception, il n'y a aucun transfert d'effort entre l'ensemble chape 42 et le mécanisme de transmission. Lors d'un choc, l'ensemble chape pourra se déplacer sans endommager le système de transmission. C'est un pas important dans l'amélioration de la fiabilité des dérailleurs notamment en usage tout terrain. Dans le cas où la batterie serait vide, il est alors possible de déplacer manuellement la chape manuellement et de changer alors de vitesse. C'est un mode de fonctionnement dégradé.

Dans son fonctionnement, lors d'une impulsion pour monter les vitesses, passage de la chaîne d'un pignon vers un pignon de plus grand diamètre, suivant la Figure 7c, l'ensemble électroaimant 322 actionne le noyau 331 dans la direction X positif. L'effort de rappel généré par le ressort 308 procure une résistance à la rotation de la poulie d'indexation 306. Les brides de transfert 311 et 312 étant liées à l'axe de transmission 303, alors le cliquet sous l'effet de cette résistance, pivote autour de l'axe 315.

Le cliquet 317 bascule dans le sens horaire. La dent inférieure 330 vient en contact avec une dent de la crémaillère 310 suivant le détail C. Ainsi le cliquet 317 entraîne la crémaillère 318 dans le sens anti-horaire. La rotation de la bride de transfert inférieure 312 par le contact entre la pente 337 et le pion buté 327 fait pivoter le palonnier 307 suivant le détail C1 jusqu'au blocage en rotation. Le blocage en rotation se produit lors de la rencontre géométrique entre le rayon R1 du nez 335 et le point buté 327. Pendant cette phase transition, le doigt de blocage 325 du palonnier de blocage 307 libère la poulie d'indexation 306 par une rotation autour de l'axe A8.

Lors de l'arrêt de l'alimentation de l'ensemble électroaimant 322, le ressort de rappel de l'ensemble électroaimant 322 ramène la bride de transfert inférieure 312 en position médiane, le ressort 320 ramène le cliquet 317 en position centrée. L'extrémité du doigt 325 vient se centrer dans le rayon d'une nouvelle dent 324 de la poulie d'indexation 306 et positionne alors l'arbre de transmission 303 dans la position angulaire désirée.

Lors d'une impulsion pour descendre les vitesses, passage de la chaîne d'un pignon vers un pignon de plus petit diamètre, suivant la Figure 7d, l'ensemble électroaimant 322 actionne le noyau 331 dans la direction X négatif. L'effort de rappel généré par le ressort 308 procure une résistance à la rotation de la poulie d'indexation 306. Les brides de transfert étant liées à l'axe de transmission 303, alors le cliquet sous l'effet de cette résistance, pivote autour de l'axe 315.

Le cliquet 317 bascule dans le sens antihoraire. La dent supérieure 330 vient en contact avec une dent de la crémaillère 310 suivant le détail D. Ainsi le cliquet 317 entraîne la crémaillère dans le sens horaire. La rotation de la bride de transfert inférieure 312 par le contact entre la pente 336 et le pion buté 327 fait pivoter le palonnier 307 suivant le détail D1 jusqu'au blocage en rotation. Le blocage en rotation se produit lors de la rencontre géométrique entre le rayon R1 du nez 335 et le point buté 327. Pendant cette phase transition, le doigt de blocage 325 du palonnier de blocage 307 libère la poulie d'indexation 306 par une rotation autour de l'axe A8.

Lors de l'arrêt de l'alimentation de l'ensemble électroaimant 322, le ressort de rappel de l'ensemble électroaimant ramène la bride de transfert inférieure 312 en position médiane, le ressort 320 ramène le cliquet 317 en position centrée. L'extrémité du doigt 325 vient se centrer dans le rayon d'une nouvelle dent 324 de la poulie d'indexation 306 et positionne alors l'arbre de transmission 303 dans la position angulaire désirée.

Comme le déplacement de l'ensemble chape 42 est déterminé par la position géométrique de la poulie d'indexation 306 alors le réglage du positionnement de l'alignement entre le galet de guidage et la cassette se limite au réglage de la position zéro vis-à-vis du pignon de plus petit diamètre. Ce réglage est possible le corps 203 est équipé d'une semelle de liaison 213 usinée avec 2 trous oblongs circulaires.

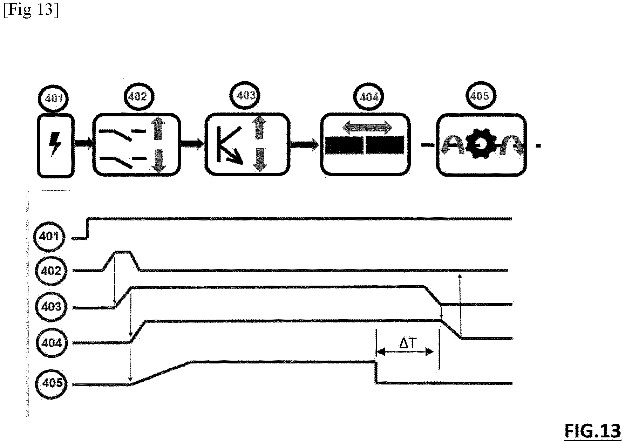

La commande de l'actuation électromécanique est schématisée par la Figure 13. Sa logique de fonctionnement est structurée autour de cinq étapes, l'alimentation, la commande, sa mémorisation, l'amplification et le déplacement.

La spécificité de ce dérailleur et de sa commande électromécanique est que l'alimentation 401 de la commande électromécanique est commune avec la batterie du vélo. Elle peut être de 12 volts, 24 volts et 48 volts. Contrairement aux solutions actuelles, ce système ne possède pas de batterie spécifique. Le circuit électrique est équipé d'une protection fusible ou d'un disjoncteur.

La commande de changement de vitesse se situe sur le guidon. Un bouton poussoir marqué + commande la montée des rapports, un bouton poussoir marqué- commande la descente des rapports. Ces boutons poussoir peuvent être intégrés dans les différentes commandes au guidon du vélo par exemple : le degré d'assistance, la commande phare, le klaxon etc...

Suivant la Figure 13, une pression sur le bouton de commande de changement de vitesse génère une impulsion 402. Cette impulsion est mémorisée 403. La fonction mémoire est réalisée par un auto-maintien. Un nouveau changement de vitesse n'est possible qu'après relâchement de la pression sur le bouton poussoir de la commande de vitesse.

L'amplification 404 est le résultat de l'impulsion 403, c'est l'étage puissance. Cette amplification est réalisée par un relais de puissance ou par un transistor de puissance. Le niveau de puissance délivré par le circuit est calibré et alimente l'électro-aimant linéaire bidirectionnel. La calibration du niveau de puissance s'applique aux deux paramètres de la commande. En valeur, la puissance délivrée par le circuit est supérieure à la puissance demandée par le changement de vitesse. En durée, elle est supérieure à la durée nécessaire à la mise en butée du système mécanique. Il y a donc un écart de temps ΔT positif entre la fin de l'amplification 404 et le contact entre la bride de transfert inférieure 312 avec les pions buté 327.

Un tel système consomme de l'énergie uniquement dans les phases de changement de vitesse. Le cliquet 317 revenant en position centrale lors du relâchement de la commande. Il n'y a pas de mise en mémoire, pas d'alimentation permanente. Il n'y a pas de réglage électronique de la position du dérailleur vis à vis de la cassette. Ce réglage est uniquement mécanique, il ne concerne que la position du zéro. C'est l'alignement entre le plus petit pignon de la cassette et le galet de guidage. L'ensemble des autres positions étant déterminé par la position des creux des dents de la poulie d'indexation 306.

Un tel système de commande électrique, basé sur des composants bon marché et sur une logique simple peut être très facilement intégré dans la logique de fonctionnement de l'assistance électrique du VAE. De façon non limitative, elle peut inclure; le changement automatique des vitesses en fonction du couple de pédalage, le blocage du changement de vitesse à l'arrêt, l'aide à l'assistance au changement de vitesse, etc.

D'un point de vue intégration physique, les composants et le circuit sont intégrés à l'intérieur du boitier 301. Il peut aussi être déporté du dérailleur vers l'intérieur du carter de la motorisation électrique sur les circuits électriques déjà existants.

L'ensemble de ces pièces constituant le mécanisme de la commande électromécanique sont assemblés dans un boitier 301. Le boitier 301 est fermé de façon étanche par un couvercle 335. Le couvercle 335 reçoit le capteur de vitesse 323 de rotation de la roue du vélo.

## Revendications

1. Dérailleur modulaire intégré **caractérisé en ce qu'**il est constitué par un système de déplacement latéral sur lequel peuvent être fixé un mécanisme de commande manuel ou un mécanisme de commande électromécanique. Ces deux mécanismes se fixent au corps par l'intermédiaire d'une bride de raccordement. Les deux mécanismes sont munis d'un arbre de transmission guidé par des paliers fixés dans le corps. Les arbres de transmission transmettent le mouvement de rotation généré par les mécanismes de commande à la bascule motrice. Suivant les Figures 5a et 5b le système de déplacement latéral comprend un corps, sur lequel viennent se raccorder la bascule motrice et la bascule intérieure. Sur lesdites bascules se raccordent le corps du tambour. Cet ensemble constitué avec le corps, les bascules et le corps de tambour réalise un quadrilatère déformable pivotant autour des axes A1, A2, A3, A4. Suivant la Figure 12 l'ensemble tambour comprend le corps de tambour, l'axe pivot, les paliers principaux et secondaires, le ressort de tension de chaîne et l'amortisseur. Sur l'axe pivot est fixée directement la chape intérieure. Elle reçoit le galet tendeur et le galet guidage ainsi que la chape extérieure. La chape extérieure et la chape intérieure sont percées d'un trou de blocage. Le corps du tambour est percé aussi d'un trou de blocage. L'alignement des trous de blocage des chapes et du corps du tambour permet le passage d'un outil, tournevis ou clé Allen. Cette position bloque l'ensemble chape de telle sorte que le chaîne soit détendue. Le démontage de la roue arrière devient facile. Le mécanisme de commande manuel est composé par une semelle qui reçoit la gaine de câble, le bras de commande muni de deux oreilles butées, et le ressort de rappel du parallélogramme déformable. Les butées des positions mini et maxi du bras de commande sont réalisées par deux vis de réglage positionnées sur la bride de liaison. Le bras de commande est fixé à l'arbre de transmission. Le mécanisme de commande électromécanique utilise comme force motrice un électro-aimant linéaire bidirectionnel équipé d'un rappel par ressort. Il est composé par un système d'indexation et un système de transmission du mouvement. Le système d'indexation est composé par une poulie d'indexation, un palonnier d'indexation et un ressort de pression. Le mécanisme de transmission du mouvement comprend un électro-aimant linéaire bidirectionnel, un noyau, un cliquet, une crémaillère, une bride de transfert inférieure et une bride de transfert supérieure. Un ressort centre le cliquet vis à vis du noyau de l'ensemble électroaimant. Ce mécanisme est regroupé dans un boîtier étanche.

2. Dérailleur modulaire intégré suivant la revendication 1 **caractérisé en ce que** suivant la Figure 5b l'ensemble chape est relié à l'ensemble tambour par l'intermédiaire de l'arbre pivot qui est fixé à l'ensemble chape par la chape intérieure. L'arbre pivot est solidaire de la chape intérieure.

3. Dérailleur intégré suivant la revendication 1 et 2 en ce que suivant les figures 8 et 9 le corps du dérailleur est fixé au bras oscillant ou à la base du cadre de façon rigide entre la cassette et l'axe du pédalier. Cette liaison est réalisée par l'intermédiaire d'une bride de liaison qui se fixe sur la partie interne ou inférieure du bras oscillant ou sur la partie interne ou inférieure de la base du cadre. Les vis de fixation de la bride de liaison sont distantes d'une longueur égale à 2 pouces (50.8mm).

4. Dérailleur intégré suivant les revendications 1, 2 et 3 en ce que suivant la Figure 10, l'axe géométrie du corps du tambour, est décalé d'un angle σ d'une valeur comprise entre 1° et 3° par rapport à l'axe de la roue arrière. L'angle σ est mesuré dans un plan perpendiculaire au plan longitudinal du vélo, passant par l'axe de la roue arrière et l'axe du pédalier.

5. Dérailleur intégré suivant la revendication 1 **caractérisé en ce que**, suivant la Figure 11, considérant la position du dérailleur vis à vis de la cassette, la distance entre l'axe du tambour A5, l'axe de rotation du galet de guidage A6, le diamètre moyen du galet de guidage ØD, le diamètre moyen du petit pignon ØE, le dérailleur étant indexé sur le pignon de plus petit diamètre alors la position du galet de guidage satisfait deux conditions géométriques; sur l'axe X l'abscisse de l'axe de rotation A6 du galet de guidage est supérieure à la somme du diamètre primitif du plus petit pignon de la cassette ØE et du diamètre primitif du galet de guidage ØD divisé par deux ((ØE+ØD)/2) et sur l'axe Y l'ordonnée du point C est positive. Le point C est coïncident au cercle primitif du galet de guidage, positionné de telle sorte que son ordonnée soit maximale positive. Les deux conditions géométriques sont définies dans le repère orthogonal qui a pour origine l'axe géométrique de la roue arrière, l'abscisse X passe par l'axe du pédalier dans le sens croissant. L'ordonnée Y est perpendiculaire à l'abscisse X, le sens croissant étant orienté de l'axe géométrique de la roue arrière vers la partie supérieure de la bicyclette.

6. Dérailleur intégré suivant la revendication 1 en ce que la gaine qui guide le câble de commande de changement de vitesse vient se loger par la face frontale du dérailleur, le parcours de la gaine étant dans le prolongement de la base de cadre ou du bras oscillant.

7. Dérailleur intégré suivant la revendication 1 et la revendication 7, en alternative le logement dans lequel vient se loger la gaine peut être déporté sur le bras oscillant ou pour des vélos semi-rigide le logement dans lequel vient se loger la gaine peut être déporté sur la base du cadre. Dans ce cas un patin anti-friction est positionné sur la partie inférieure du boîtier de pédalier.

8. Dérailleur intégré suivant la revendication 1 en ce que suivant la Figure 7a, le système d'indexation est réalisé par une poulie d'indexation, un palonnier de blocage et un ressort de pression. La poulie d'indexation comprend un ensemble d'encoches d'indexation. Le doigt du palonnier d'indexation vient centrer la poulie d'indexation par contact entre l'extrémité du doigt et le fond l'encoche. Le fond de chaque l'encoche est positionné angulairement. A chaque fond d'encoche correspond à un alignement entre le plan de symétrie du galet de guidage et le plan de symétrie d'un pignon de la cassette. L'angle entre le fond de chaque encoche prise deux à deux n'est pas constant. La distance circulaire entre chaque sommet des encoches est variable. Le nombre d'encoche est égal au nombre de vitesses. Le ressort de pression maintient la position angulaire par contact entre le doigt du palonnier et le fond de l'encoche.

9. Dérailleur intégré suivant la revendication 1 en ce que le mécanisme de changement de vitesse est équipé d'une bride de transfert équipé de deux pentes et d'un nez qui permette de déplacer le palonnier lors du déplacement du cliquet et de réaliser une buté de fin de course en rotation

10. Dérailleur intégré suivant la revendication 1 en ce que le cliquet, l'ensemble électro-aimant n'étant pas excité, est déconnecté de la crémaillère. Le cliquet est maintenu dans cette position avec un ressort de rappel positionné entre la queue du cliquet et la chape du noyau de l'ensemble électro-aimant.

11. Dérailleur intégré suivant la revendication 1 en ce que la durée du signal de puissance de l'alimentation de l'électro-aimant soit supérieure à la durée du mouvement de changement de vitesse mécanique de l'ensemble chape.

12. Dérailleur intégré suivant la revendication 1 en ce que l'alimentation électrique de du mécanisme électromagnétique de changement de vitesse est alimenté par la batterie du VAE.

13. Dérailleur intégré suivant la revendication 1 en ce que le couvercle ou le corps du boîtier de la commande électromécanique contient le capteur de vitesse mesurant la vitesse de rotation de la roue arrière.

14. Dérailleur intégré suivant la revendication 1 le dérailleur peut être recouvert d'un capot. Le capot peut être fixé directement sur le dérailleur ou sur le cadre ou le bras oscillant. Le capot peut être réalisé dans certains cas en deux parties. Une partie couvrant la partie fixe du dérailleur, une autre la partie mobile.

## Revendications modifiées

### Revendications modifiées conformément à la règle 137(2) CBE.

1. Vélo, en particulier à assistance électrique, comprenant un dérailleur arrière modulaire intégré qui est constitué par un système de déplacement latéral (200) sur lequel est fixé sélectivement un mécanisme de commande manuel (100) ou un mécanisme de commande électromécanique (300), **caractérisé en ce que** les deux mécanismes de commande sont fixé sur un corps (203) par l'intermédiaire d'une bride de raccordement (213), les deux mécanismes de commandes sont chacun muni d'un arbre de transmission (106,303 ) guidé par des paliers (220) fixés dans le corps, les arbres de transmission transmettent le mouvement de rotation généré par les mécanismes de commande à une bascule motrice (204),le système de déplacement latéral (200) comprend le corps (203), sur lequel sont raccordées la bascule motrice (204) et une bascule intérieure (205), sur lesdites bascules est raccordés un corps de tambour (236), l'ensemble constitué par le corps, les bascules et le corps de tambour réalise un parallélogramme déformable pivotant autour de quatre axes (A1, A2,A3, A4), dont le plan est incliné par rapport au plan longitudinal d'un angle compris entre 25° et 45°, un ensemble tambour (41) comprend le corps de tambour, un arbre pivot (231), des paliers principaux et secondaires (233, 235), un ressort de rappel de la tension de chaine (232)qui est fixé à une extrémité à l'arbre pivot (231) et à l'autre extrémité à un couvercle (230),sur l'arbre pivot est fixé directement une chape intérieure(209) qui reçoit un galet tendeur (212), un galet de guidage (207) ainsi qu'une chape extérieure (219), un ensemble chape (42) comprend le galet de guidage, le galet tendeur, la chape intérieure et la chape extérieure, la chape extérieure et la chape intérieure sont percées d'un trou de blocage, le corps de tambour est percé aussi d'un trou de blocage (218), l'alignement des trous de blocage des chapes et du corps de tambour permet le passage d'un outil, tournevis ou clé Allen, ce qui permet de bloquer l'ensemble chape de telle sorte que la chaine du vélo soit détendue, ce qui rend facile le démontage de la roue arrière de vélo, le mécanisme de commande manuel est composé d'une semelle (101) qui reçoit une gaine de commande (103), un bras de commande (102) muni de deux oreilles butées (113), et un ressort de rappel (105) du parallélogramme déformable, les butées des positions mini et maxi du bras de commande sont réalisées par deux vis de réglages (108) positionnées sur une bride de liaison (201), le bras de commande est fixé directement à l'arbre de transmission (106) du mécanisme de commande manuel, le mécanisme de commande électromécanique utilise comme force motrice un électroaimant linéaire bidirectionnel (322) équipé d'un rappel par ressort, le mécanisme de commande électromécanique est composé par un système d'indexation et un système de transmission de mouvement, le système d'indexation est composé par une poulie d'indexation (306), d'un palonnier d'indexation (307) et un ressort de pression (308), le système de transmission de mouvement comprend ledit électroaimant linéaire bidirectionnel, un noyau (331), un cliquet (317), une crémaillère (310), une bride de transfert inférieure (312)et une bride de transfert supérieure (311), un ressort (320) de centrage du cliquet vis-à-vis du noyau, le mécanisme de commande électromécanique est regroupé dans un boitier (301) étanche.

2. Vélo suivant la revendication 1 **caractérisé en ce que** l'ensemble chape (42) est relié à l'ensemble tambour (41) par l'intermédiaire de l'arbre pivot (231) qui est fixé à l'ensemble chape par la chape intérieure (209), l'arbre pivot est fixé solidairement de la chape intérieure (209).

3. Vélo suivant la revendication 1 et 2 **caractérisé en ce que** le corps (203) est fixé au bras oscillant ou à la base (215) du cadre de façon rigide entre une cassette (222) et l'axe du pédalier du vélo, cette fixation étant réalisée par l'intermédiaire de la bride de liaison (201) qui se fixe sur la partie interne ou inférieure du bras oscillant ou sur une partie interne ou inférieure de la base du cadre, des vis de fixation (221) de la bride de liaison étant distantes d'une longueur égale à 2 pouces (50.8mm).

4. Vélo suivant les revendications 1, 2 et 3 **caractérisée en ce que** l'axe géométrie (A5) du corps du tambour, est décalé d'un angle (σ) d'une valeur comprise entre 1° et 3° par rapport à l'axe de la roue arrière. L'angle (σ) est mesuré dans un plan perpendiculaire au plan longitudinal du vélo, passant par l'axe de la roue arrière et l'axe du pédalier.

5. Vélo suivant la revendication 1 **caractérisé en ce que**, considérant la position du dérailleur vis à vis de la cassette (222) du vélo, la distance entre l'axe (A5) du corps du tambour (236) et l'axe de rotation (A6) du galet de guidage (207), le diamètre primitif (ØD) du galet de guidage (207) et le diamètre primitif (ØE) du plus petit pignon de la cassette, le dérailleur étant indexé sur le plus petit pignon de la cassette , c-à-d le pignon de plus petit diamètre de la cassette, alors la position du galet de guidage(207) satisfait les deux conditions géométriques suivantes :
* sur l'axe X, l'abscise de l'axe de rotation (A6) du galet de guidage est supérieure à la somme du diamètre primitif (ØE) du plus petit pignon de la cassette et du diamètre primitif (ØD) du galet de guidage divisé par deux ((ØE+ØD)/2), et
* sur l'axe Y, l'ordonnée du point C est inscrite entre les ordonnées des deux points d'intersection du cercle primitif du pignon de plus petit diamètre de la cassette avec l'axe Y. Le point C est coïncident au cercle primitif du galet de guidage, positionné de telle sorte que son ordonnée soit maximale positive.
Les deux conditions géométriques sont définies dans le repère orthogonal (OXY) qui a pour origine l'axe géométrique (O) de la roue arrière, l'abscisse X passant par l'axe du pédalier dans le sens croissant. L'ordonnée Y étant perpendiculaire à l'abscisse X, le sens croissant de l'ordonnée étant orienté de la roue arrière vers la partie supérieure de la bicyclette.

6. Vélo suivant la revendication 1, **caractérisé en ce que** la gaine de commande (103) qui guide le câble de commande de changement de vitesse vient se loger par la face frontale du dérailleur, le parcours de la gaine étant dans le prolongement d'une base (215) du cadre ou d'un bras oscillant.

7. Vélo suivant la revendication 1, **caractérisé en ce que** le logement dans lequel vient se loger la gaine du câble de commande (103) est déporté sur un bras oscillant du vélo, ou, pour un vélo semi rigide, le logement dans lequel vient se loger la gaine de commande (103) est déporté sur une base du cadre proche du boitier de pédalier, ou sur le tube inférieur du cadre alors un patin antifriction est positionné sur la partie inférieure du boîtier de pédalier.

8. Vélo suivant la revendication 1, **caractérisé en ce que** le corps (203) se monte directement sur une base cadre ou sur le bras oscillant sans l'intermédiaire de la bride de liaison (201) dans le cas où l'angle σ1 est égal à 0°, alors les vis butées (108) sont positionnées directement sur le corps (203) de part et d'autre du bossage contenant l'arbre de transmission (106).

9. Vélo suivant la revendication 1, en ce que la poulie d'indexation (306) comprend un ensemble d'encoches d'indexation (324), un doigt (325) du palonnier d'indexation (307) vient centrer la poulie d'indexation par contact entre l'extrémité du doigt et le fond d'une des encoches, le fond de chaque encoche est positionné angulairement, chaque fond d'encoche correspond à un alignement entre le plan de symétrie du galet de guidage (207) et le plan de symétrie d'un pignon de la cassette (222) du vélo, l'angle entre le fond de chaque encoche prise deux à deux n'est pas constant, la distance circulaire entre chaque sommet des encoches est variable, le nombre d'encoche est égal au nombre de vitesses, le ressort de pression (308) maintient la position angulaire par contact entre le doigt du palonnier et le fond de l'encoche.

10. Vélo suivant la revendication 1, en ce que la bride de transfert inférieure (312) est équipée de deux pentes (336,337) et d'un nez (335) et elle permet de déplacer le palonnier (307) lors du déplacement du cliquet (317) et de réaliser une buté de fin de course en rotation.

11. Vélo suivant la revendication 1, en ce que le cliquet (317), l'électro-aimant (322) n'étant pas excité, est déconnecté de la crémaillère (310), le cliquet est maintenu dans cette position avec le ressort de rappel (320) positionné entre une queue (333) du cliquet et une chape (319) d'un noyau (331).

12. Vélo suivant la revendication 1, **caractérisé en ce que** la durée du signal de puissance de l'alimentation de l'électro-aimant (322) est supérieure à la durée du mouvement de changement de vitesse mécanique de l'ensemble chape (42).

13. Vélo suivant la revendication 1, **caractérisé en ce que** le mécanisme de commande électromagnétique (300) est alimenté électriquement par la batterie du vélo à assistance électrique.

14. Vélo suivant la revendication 1, **caractérisé en ce qu'**un le couvercle (338) ou le corps du boîtier (301) du mécanisme de commande électromécanique (300) contient un capteur de vitesse (323) mesurant la vitesse de rotation de la roue arrière du vélo.
